(19) **Europäisches Patentamt**
**European Patent Office**
**Office européen des brevets**

(11) **EP 4 514 012 A1**

(12) **EUROPEAN PATENT APPLICATION**
published in accordance with Art. 153(4) EPC

(43) Date of publication:
**26.02.2025 Bulletin 2025/09**

(21) Application number: **22938451.6**

(22) Date of filing: **19.04.2022**

(51) International Patent Classification (IPC):
**H04W 72/044** *(2023.01)* **H04W 16/28** *(2009.01)*
**H04W 72/0457** *(2023.01)*

(52) Cooperative Patent Classification (CPC):
**H04W 16/28; H04W 72/044; H04W 72/0457**

(86) International application number:
**PCT/JP2022/018206**

(87) International publication number:
**WO 2023/203648 (26.10.2023 Gazette 2023/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
- **SHIBAIKE, Naoya**
  **Tokyo 100-6150 (JP)**
- **MATSUMURA, Yuki**
  **Tokyo 100-6150 (JP)**
- **NAGATA, Satoshi**
  **Tokyo 100-6150 (JP)**
- **WANG, Jing**
  **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, RADIO COMMUNICATION METHOD, AND BASE STATION**

(57)    A terminal according to one aspect of the present disclosure includes a control section that determines a base sequence, based on an index corresponding to one of a plurality of transmission/reception points for coherent joint transmission and that generates a sounding reference signal (SRS) by applying a cyclic shift to the base sequence, and a transmitting section that transmits the SRS. According to one aspect of the present disclosure, it is possible to use an appropriate SRS sequence.

$$8\left(N_{CID}\left(n_{s,f}^{\mu}N_{symb}^{slot}+l_0+l'\right)+y\right) \text{ bits}$$

| 0 | 8 | 16 | 24 | ... | | ... | 4472 |
|---|---|----|----|-----|-|-----|------|
| 1 | 9 | 17 | 25 | ... | | ... | 4473 |
| 2 | 10 | 18 | 26 | ... | | ... | 4474 |
| 3 | 11 | 19 | 27 | ... | | ... | 4475 |
| 4 | 12 | 20 | 29 | ... | | ... | 4476 |
| 5 | 13 | 21 | 29 | ... | | ... | 4477 |
| 6 | 14 | 22 | 30 | ... | | ... | 4478 |
| 7 | 15 | 23 | 31 | ... | | ... | 4479 |

BIT NUMBER

0    1    2    3                    3    CONFIGURABLE INDEX

0          ...          139    SYMBOL NUMBER

CORRESPONDING TO SYMBOL NUMBER $n_{s,f}^{\mu}N_{symb}^{slot}+l_0+l'$, CONFIGURABLE INDEX y

FIG. 11

EP 4 514 012 A1

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In future radio communication systems, a sounding reference signal (SRS) is used for various purposes. For example, an SRS in NR is used not only for uplink (UL) CSI measurement, but also for downlink (DL) CSI measurement, beam management, and the like.

For future radio communication systems (for example, 3GPP Rel. 18 (or later versions)), reception from a plurality of coherent transmission/reception points (TRPs) is under study. However, an SRS sequence in such a case has not been sufficiently studied. Unless a determination method for the SRS sequence is definite, communication throughput reduction and the like may occur.

Thus, an object of the present disclosure is to provide a terminal, a radio communication method, and a base station that can use an appropriate SRS sequence.

Solution to Problem

A terminal according to one aspect of the present disclosure includes a control section that determines a base sequence, based on an index corresponding to one of a plurality of transmission/reception points for coherent joint transmission and that generates a sounding reference signal (SRS) by applying a cyclic shift to the base sequence, and a transmitting section that transmits the SRS.

Advantageous Effects of Invention

According to one aspect of the present disclosure, it is possible to use an appropriate SRS sequence.

Brief Description of Drawings

[FIG. 1] FIG. 1 is a diagram to show an example of an SRS resource set configuration information element.
[FIG. 2] FIG. 2 is a diagram to show an example of an SRS resource configuration information element.
[FIG. 3] FIG. 3 is a table indicating a relationship between number $K_{TC}$ of transmission combs and maximum number $n_{SRS}^{CS,max}$ of SRS cyclic shifts in Rel. 16.

[FIG. 4] FIG. 4 is a table indicating number $K_{TC}$ of transmission combs and SRS cyclic shift value $n_{SRS}^{CS,i}$ in a case where number $N_{ap}^{SRS}$ of SRS ports is 2.

[FIG. 5] FIG. 5 is a table indicating number $K_{TC}$ of transmission combs and SRS cyclic shift value $n_{SRS}^{CS,i}$ in a case where number $N_{ap}^{SRS}$ of SRS ports is 4.

[FIG. 6] FIG. 6 is a diagram to show resource start position $k_{TC}^{p\_i}$ in a frequency direction in a case where number $N_{ap}^{SRS}$ of SRS ports is 2.

[FIG. 7] FIG. 7 is a diagram to show resource start position $k_0^{p\_i}$ in a frequency direction in a case where number $N_{ap}^{SRS}$ of SRS ports is 4.

[FIG. 8] FIG. 8 is a diagram to show SRS allocation to each port in a case where the number of transmission combs is 4.

[FIG. 9] FIG. 9 is a diagram to show SRS allocation to each port in a case where the number of transmission combs is 2.

[FIG. 10] FIG. 10 is a diagram to show an example of a method for determining an existing sequence group number for an SRS sequence.

[FIG. 11] FIG. 11 is a diagram to show an example of a method for determining a sequence group number according to Example 3.

[FIG. 12] FIG. 12 is a diagram to show an example of a schematic structure of a radio communication system according to one embodiment.

[FIG. 13] FIG. 13 is a diagram to show an example of a structure of a base station according to one embodiment.

[FIG. 14] FIG. 14 is a diagram to show an example of a structure of a user terminal according to one embodiment.

[FIG. 15] FIG. 15 is a diagram to show an example of a hardware structure of the base station and the user terminal according to one embodiment.

[FIG. 16] FIG. 16 is a diagram to show an example of a vehicle according to one embodiment.

Description of Embodiments

(SRS)

In NR, a reference signal for measurement (sounding reference signal (SRS)) is used for various purposes. The SRS in NR is used not only for uplink (UL) CSI measurement also used in existing LTE (LTE Rel. 8 to Rel. 14), but also for downlink (DL) CSI measurement, beam management, and the like.

A UE may be configured with one or a plurality of SRS resources. The SRS resource(s) may be identified by an SRS resource index (SRI).

Each SRS resource may include one or a plurality of SRS ports (may correspond to one or a plurality of SRS ports). For example, the number of ports for each SRS may be 1, 2, 4, or the like.

The UE may be configured with one or a plurality of SRS resource sets. One SRS resource set may be associated with a certain number of SRS resources. The UE may use a higher layer parameter in common for SRS resources included in one SRS resource set. Note that a resource set in the present disclosure may be interpreted as a set, a resource group, a group, or the like.

Information related to the SRS resources or the resource set may be configured for the UE by using higher layer signaling, physical layer signaling, or a combination of these.

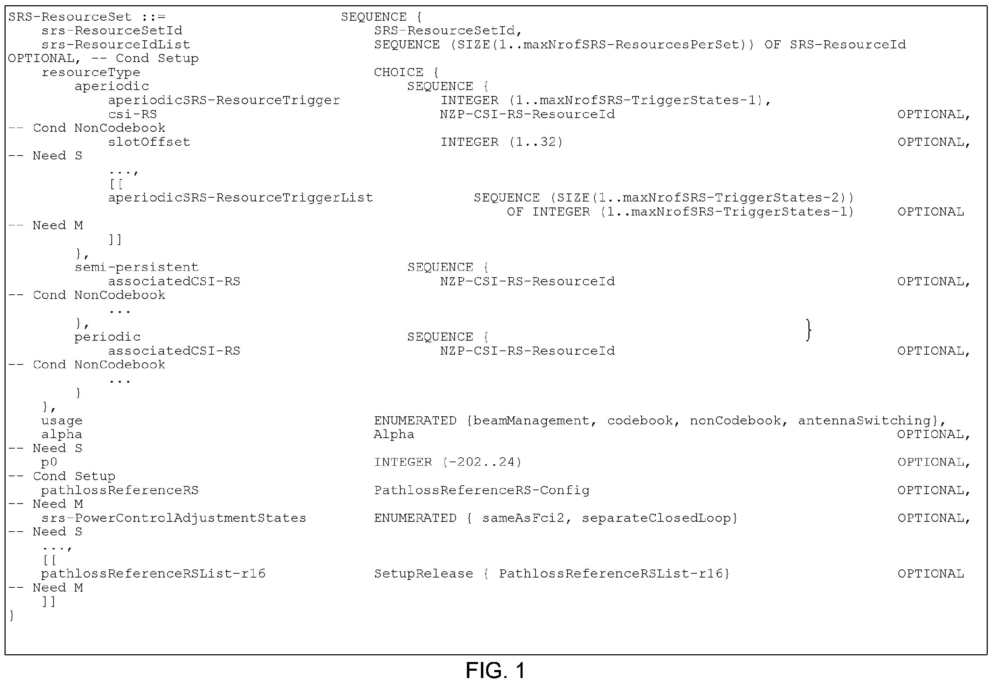

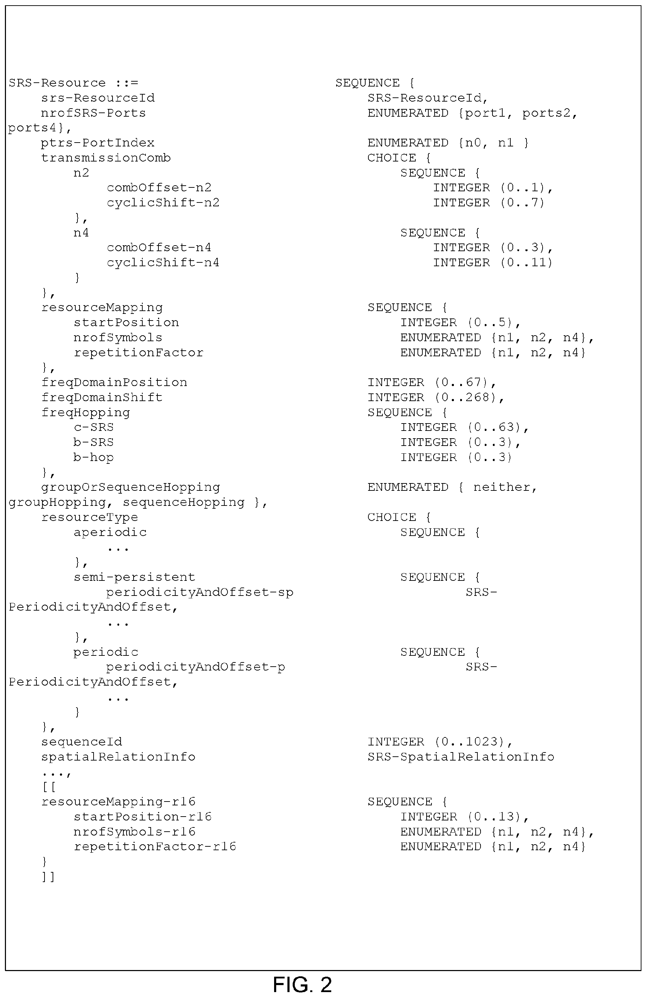

An SRS configuration information element (for example, an RRC information element "SRS-Config") may include an SRS resource set configuration information element (FIG. 1), an SRS resource configuration information element (FIG. 2), and the like.

The SRS resource set configuration information element (for example, an RRC parameter "SRS-ResourceSet") may include an SRS resource set ID (Identifier) (SRS-ResourceSetId), a list of SRS resource IDs (SRS-ResourceId) used in the resource set, an SRS resource type (resourceType), and information about SRS usage.

Here, the SRS resource type may indicate time domain behavior for SRS resource configuration (same time domain behavior), and may indicate any one of a periodic SRS (P-SRS), a semi-persistent SRS (SP-SRS), and an aperiodic SRS (A-SRS). Note that the UE may periodically (or, after activation, periodically) transmit the P-SRS and the SP-SRS. The UE may transmit the A-SRS, based on an SRS request of DCI.

The SRS usage (an RRC parameter "usage" or an L1 (Layer-1) parameter "SRS-SetUse") may be, for example, beam management (beamManagement), codebook (CB), non-codebook (NCB), antenna switching (antennaSwitcing), or the like. For example, an SRS for codebook or non-codebook usage may be used for determination of a precoder for codebook-based or non-codebook-based uplink shared channel (Physical Uplink Shared Channel (PUSCH)) transmission based on an SRI.

For an SRS for beam management usage, it may be assumed that only one SRS resource can be transmitted for each SRS resource set in a certain time instant (given time instant). Note that when a plurality of SRS resources corresponding to the same time domain behavior belong to different respective SRS resource sets in the same Bandwidth Part (BWP), these SRS resources may be transmitted simultaneously.

The SRS resource configuration information element (for example, an RRC parameter "SRS-Resource") may include an SRS resource ID (SRS-ResourceId), the number of SRS ports, an SRS port number, the number of transmission combs, SRS resource mapping (for example, a time and/or frequency resource position, resource offset, a resource periodicity, the number of repetitions, the number of SRS symbols, an SRS bandwidth, or the like), hopping-related information, an SRS resource type, a sequence ID, spatial relation information, and the like.

Values of the number of transmission combs (transmissionComb) are {2, 4}. Values of number $N_{ap}^{SRS}$ of SRS ports (nrofSRS-Ports) are {1, 2, 4}. Values of antenna port number $p_i$ are {1000, 1001, ...}. Values of number $N_{symb}^{SRS}$ of consecutive SRS OFDM symbols (nrofSymbols) are {1, 2, 4}. For a start position (startPosition) in the time domain, symbol offset $l_{offset}$ counted from an end of a slot in a direction opposite to the time domain is {0, 1, ... 5}, and the start position is given by $l_p = N_{symb}^{slot} - 1 - l_{offset}$.

Configuration of the number of transmission combs may include comb offset and cyclic shift (cyclic shift (CS) index, CS number).

SRSs from the UE with at least one of different comb offsets (subcarrier offsets) = {0, 1, ... $K_{TC}$ - 1} and different CSs may be multiplexed with each other by using the same number of transmission combs, the same RB, and the same symbol.

For each slot, the UE may switch a Bandwidth Part (BWP) for transmitting an SRS, or may switch an antenna. The UE may apply, to SRS transmission, at least one of intra-slot hopping and inter-slot hopping.

In an existing SRS, frequency domain start position $k_0^{p\_i}$ for $p_i$ (p_i) is given by the following equation.

$$k_0^{p\_i} \;=\; \bar{k}_0^{p\_i} \;+\; \Sigma_{b=0}^{BSRS} K_{TC} M_{SC,b}^{SRS} n_b$$

Here, $\bar{k}$ represents a variable obtained by adding an overline to k, and may also be referred to as k bar. $\bar{k}_0^{p\_i}$ may be based on comb offset. $K_{TC}$ is the number of transmission combs. $M_{SC,b}^{SRS}$ is the number of subcarriers in SRS bandwidth $m_{SRS,b}$ [RB], the subcarriers being used for SRS transmission. $n_b$ is a constant.

(SRS Antenna Switching)

In Rel-15 NR, antenna switching (which may be referred to as antenna port switching) is configurable as SRS usage, as described above. The SRS antenna switching may be used, for example, in a case where downlink CSI acquisition is performed by using an uplink SRS in a time division duplex (TDD) band.

For example, in the UE that has a capability to have the number of antenna ports available for transmission less than the number of antenna ports available for reception, UL SRS measurement may be used for determination of a DL precoder.

Note that the UE may report, to a network, UE capability information indicating an SRS transmission port switching pattern to be supported (for example, an RRC parameter "supportedSRS-TxPortSwitch"). This pattern is, for example, expressed in a form "txry" such as "t1r2" and "t2r4," and this may mean that SRS transmission can be performed by using x antenna ports of a total of y antennas (which may be expressed as xTyR). Here, y may correspond to all or a subset of reception antennas of the UE.

For example, for DL CSI acquisition, the UE with 2T4R (2 transmission ports, 4 reception ports) may include two SRS resources each including two ports and may be configured with an SRS resource set for antenna switching usage.

Note that, in a case where x and y in "txty" are the same value, this case may be expressed as xT = xR (for example, 4T = 4R).

(Multi-port SRS Transmission)

Multi-port SRS transmission will be described. The UE performs multiplexing using a cyclic shift when performing SRS transmission by multiple ports. Equation (1) represents cyclic shift $\alpha_i$ in antenna port $P_i$. It is studied that Equation (1) is used in Rel. 17. In Equation (1), a case where number $N_{ap}^{SRS}$ of ports = 4 and maximum number $n_{SRS}^{CS,max}$ of cyclic shifts = 6 and a case other than the case (otherwise) are assumed to be Case 1 and Case 2, respectively. In Case 1, number $K_{TC}$ of transmission combs is 8.

$$\alpha_i = 2\pi \frac{n_{SRS}^{CS,i}}{n_{SRS}^{CS,max}},$$

where:

$$n_{SRS}^{CS,i} = \begin{cases} \left( n_{SRS}^{CS} + \dfrac{n_{SRS}^{CS,max} \left\lfloor \dfrac{p_i - 1000}{2} \right\rfloor}{N_{ap}^{SRS}/2} \right) \bmod n_{SRS}^{CS,max} \\ \qquad if \ N_{ap}^{SRS} = 4 \ and \ n_{SRS}^{CS,max} = 6, \\ \left( n_{SRS}^{CS} + \dfrac{n_{SRS}^{CS,max}(p_i - 1000)}{N_{ap}^{SRS}} \right) \bmod n_{SRS}^{CS,max} \ otherwise \end{cases} \tag{1}$$

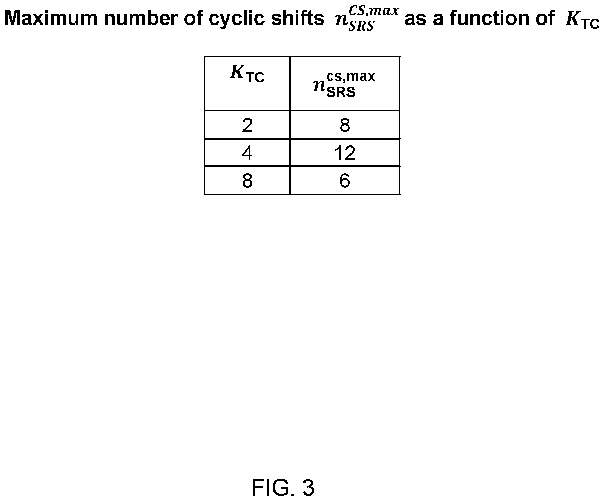

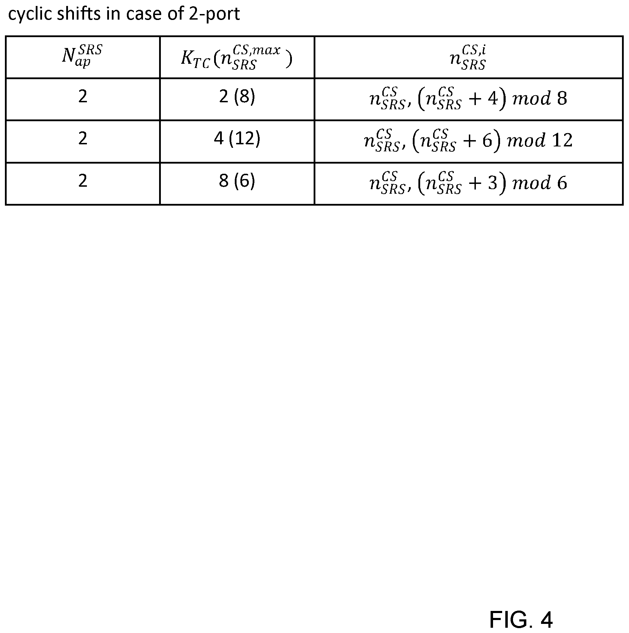

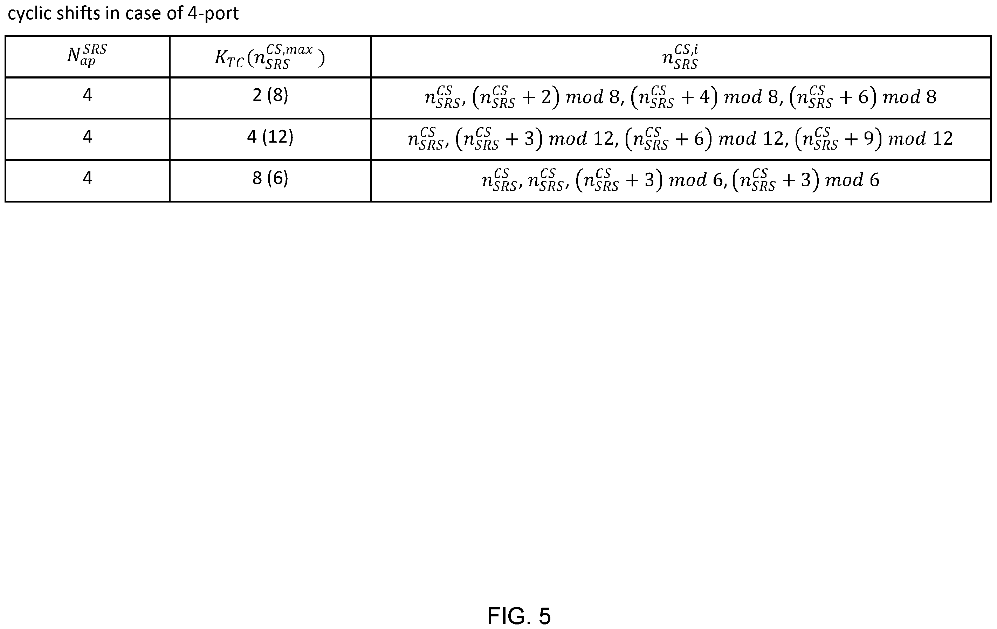

FIG. 3 is a table indicating a relationship between number $K_{TC}$ of transmission combs and maximum number $n_{SRS}^{CS,max}$ of SRS cyclic shifts in Rel. 16. Note that $n_{SRS}^{CS,max} \in \{0, 1, ..., n_{SRS}^{CS,max}\}$ and $N_{ap}^{SRS} \in \{1, 2, 4\}$. FIG. 4 is a table indicating number $K_{TC}$ of transmission combs and SRS cyclic shift value $n_{SRS}^{CS,i}$ in a case where number $N_{ap}^{SRS}$ of SRS ports is 2. FIG. 5 is a table indicating number $K_{TC}$ of transmission combs and SRS cyclic shift value $n_{SRS}^{CS,i}$ in a case where number $N_{ap}^{SRS}$ of SRS ports is 4.

Equation (2) represents resource start position $k_0^{p\_i}$ in a frequency direction. It is studied that Equation (2) is used in Rel. 17. Note that for three cases of $k_{TC}^{p\_i}$, the first Case (A) corresponds to odd-numbered ports {1001, 1003} in a case where the number of transmission combs is 8. The second case (Case B) corresponds to odd-numbered ports {1001, 1003} having above-average cyclic shift values ($n_{ap}^{CS} = \in \{n_{SRS}^{CS,max}/2, ..., n_{SRS}^{CS,max}\}$) in a case where the number of transmission combs is 2, 4. The third case (Case C) is another case.

$$k_0^{p_i} = \bar{k}_0^{p_i} + n_{offset}^{FH} + n_{offset}^{RPFS},$$

$$\bar{k}_0^{p_i} = n_{shift} N_{SC}^{RB} + \left( k_{TC}^{p_i} + k_{offset}^{l'} \right) \bmod K_{TC}$$

where:

$$k_{TC}^{p_i}$$

$$= \begin{cases} \left( \bar{k}_{TC} + K_{TC}/2 \right) \bmod K_{TC} \\ \qquad if \ N_{ap}^{SRS} = 4, \ p_i \in \{1001, 1003\} \ and \ n_{SRS}^{CS,max} = 6, \\ \left( \bar{k}_{TC} + K_{TC}/2 \right) \bmod K_{TC} \\ \qquad if \ N_{ap}^{SRS} = 4, \ p_i \in \{1001, 1003\} \ and \ n_{SRS}^{CS} = \in \{n_{SRS}^{cs,max}/2, ..., n_{SRS}^{cs,max} - 1\}, \\ \bar{k}_{TC} \ otherwise \end{cases}$$

$$k_{offset}^{l'} : \text{Positioning specific offset}$$

$$n_{offset}^{FH} = \sum_{b=0}^{B_{SRS}} m_{SRS,b} N_{SC}^{RB} n_b$$

$$n_{offset}^{RPFS} = N_{SC}^{RB} m_{SRS,B_{SRS}} \left( (k_F + k_{hop}) \bmod P_F \right) / P_F \tag{2}$$

nshift is configured by a parameter "freqDomainShift" of the SRS resource configuration information element (FIG. 2). "combOffset" of the SRS resource configuration information element is used for $k^-_{TC}$. $K_{TC}$ is configured by "transmissionComb" of the SRS resource configuration information element. In other words, in Case C, an RRC parameter value is directly applied.

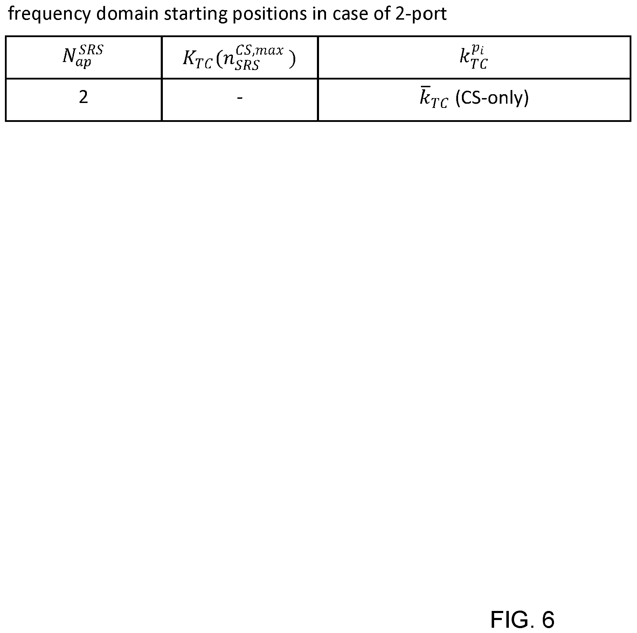

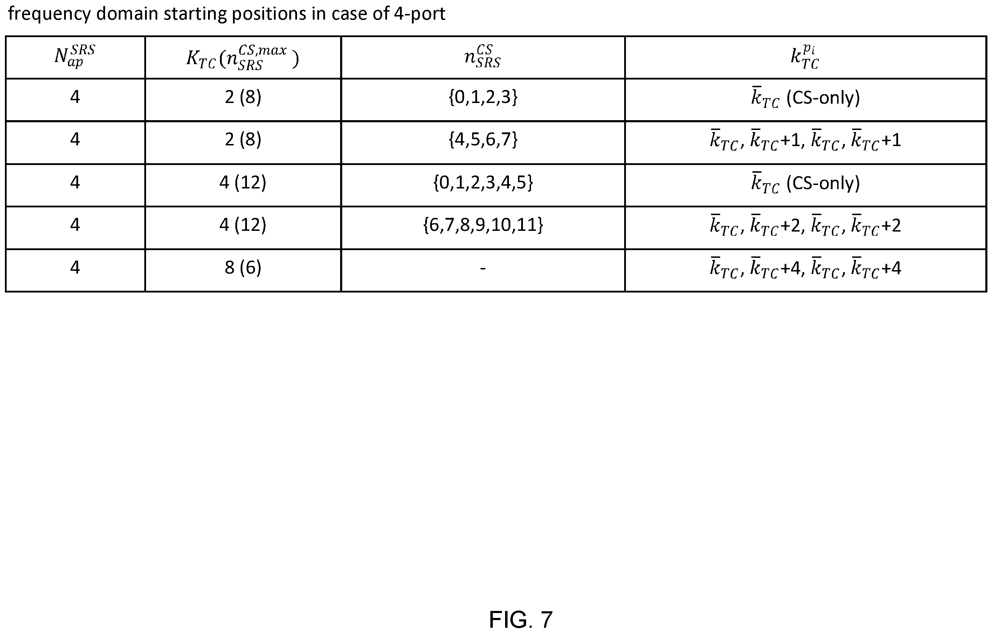

FIG. 6 is a diagram to show resource start position $k_{TC}^{p\_i}$ in the frequency direction in a case where number $N_{ap}^{SRS}$ of SRS ports is 2. In this example, Case C of Equation (2) is used. FIG. 7 is a diagram to show resource start position $k_0^{p\_i}$ in the frequency direction in a case where number $N_{ap}^{SRS}$ of SRS ports is 4. In this example, Case C of Equation (2) is applied to the first or third row (case of $(n_{SRS}^{CS})$ = {0, 1, 2, 3} or {0, 1, 2, 3, 4, 5}), Case B of Equation (2) is applied to the second or fourth row (case of $(n_{SRS}^{CS})$ = {4, 5, 6, 7} or {6, 7, 8, 9, 10, 11}), and Case A is applied to the fifth row (case of $K_{TC}$ $(n_{SRS}^{CS,max})$ = 8(6)).

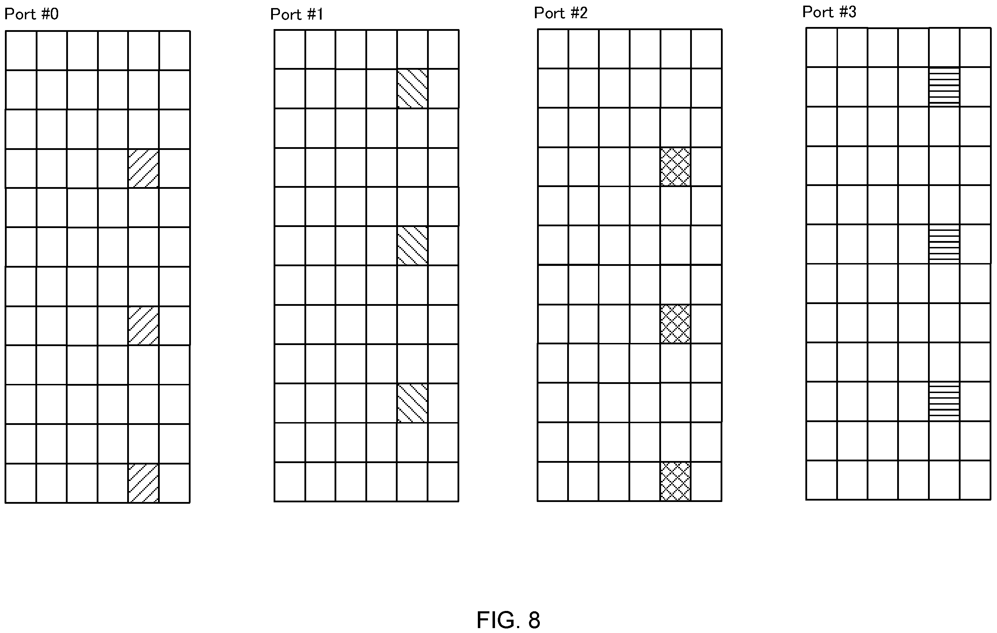

FIG. 8 is a diagram to show SRS allocation to each port in a case where the number of transmission combs is 4. In this example, Case C and Case B of Equation (2) are used for ports #0 and #2 and ports #1 and # 3, respectively. A different cyclic shift is used in each port. Note that, in FIG. 8, the horizontal axis and the vertical axis represent time and frequency, respectively. The same applies to a diagram to show other SRS allocation.

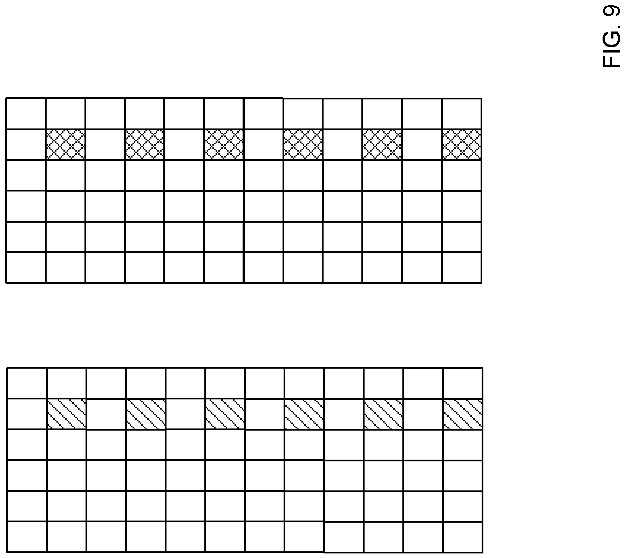

FIG. 9 is a diagram to show SRS allocation to each port in a case where the number of transmission combs is 2. In this example, Case C of Equation (2) is used for ports #0 and #1. A different cyclic shift is used in each port.

(Base Sequence)

An SRS sequence is given by the following expression. Here, x^y represents an expression obtained by adding y to the upper right of x.

$$r^{p_i}(n, l') = r_{u,v}^{\wedge}(\alpha_i, \delta)(n)$$

$$0 \leq n \leq M_{sc,b}^{SRS} - 1$$

$$l' \in \{0, 1, ..., N_{symb}^{SRS} - 1\}$$

$$r_{u,v}^{\wedge}(\alpha_i, \delta)(n) = e^{j\alpha n}r^-_{u,v}(n), \ 0 \leq n \leq M_{ZC}$$

At least one of sequence hopping and group hopping for a low PAPR sequence may be configured by RRC. Base sequence $r_{u,v}(n)$ is divided into a plurality of groups. $r^-$ represents a variable obtained by adding an overline to r, and may also be referred to as r bar. u = {0, 1, ..., 29} represents a group number, and v represents a base sequence number in a group. Each group includes one base sequence (v = 0) of length $mM_{ZC} = N_{SC}^{RB}/2^\delta$, $1/2 \leq m/2^\delta \leq 5$ and two base sequences (v = 0, 1) of length $mM_{ZC} = N_{SC}^{RB}/2^\delta$, $6 \leq m/2^\delta$. The definition of base sequence $r_{u,v}(0)$, ..., $r_{u,v}(M_{ZC} - 1)$ depends on sequence length $M_{ZC}$.

The group hopping is based on SRS sequence ID $n_{ID}^{SRS}$ and a symbol number in a radio frame for an SRS resource. The symbol number is determined by slot number $n_{s,f}^\mu$ in the radio frame, number $N_{symb}^{slot}$ of symbols in a slot, start symbol $l_0$ for the SRS resource, and SRS symbol number l' in the SRS resource.

In the sequence hopping, a sequence number is based on a symbol number in the radio frame for the SRS resource.

(JT)

Joint transmission (JT) may mean simultaneous data transmission from a plurality of points (for example, TRPs) to a single UE.

Rel. 17 supports non-coherent joint transmission (NCJT) from two TRPs. PDSCHs from the two TRPs may be independently precoded and independently decoded. Frequency resources may be non-overlapping, partially overlapping, or fully overlapping. When the overlap occurs, a PDSCH from one TRP serves as interference to a PDSCH from another TRP.

For Rel. 18, it is studied that coherent joint transmission (CJT) using up to 4 TRPs is supported. Data from four TRPs may be coherently precoded and transmitted to the UE on the same time-frequency resource. For example, in consideration of channels from the four TRPs, the same precoding matrix may be used. Coherent may mean that there is a certain relationship between phases of a plurality of received signals. Signal quality may be improved by using 4-TRP joint precoding, and interference among the four TRPs may be absent. The data may receive only interference outside the four TRPs.

(Analysis)

The CJT is transmission from a plurality of coherent TRPs on different MIMO layers on the same time and frequency resources. SRSs configured by one TRP may be simultaneously received by the plurality of coherent TRPs.

The SRSs configured by one TRP may be a strong interference source when viewed from another coherent TRP. In this case, it is conceivable that SRS sequence randomization for interference mitigation for an SRS from another UE is used. How to randomize an SRS sequence for the CJT case is an issue. Unless the SRS sequence is appropriately determined, communication throughput reduction and the like may occur.

Thus, the inventors of the present invention came up with the idea of a method for determining an SRS sequence.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, description "Rel. XX" represents 3GPP release. Note, however, that a release number "XX" is an example, and may be replaced with another number.

In the present disclosure, a CS index, a CS number, a CS value (cyclic shift value), $n_{SRS}^{cs}$, and $n_{SRS}^{cs,i}$ may be interchangeably interpreted.

In the present disclosure, an SRS sequence may be a low peak-to-average power ratio (PAPR) sequence defined by cyclic shift (CS) $\alpha_i$ of a base sequence. $\alpha_i$ may be given by $2\pi * n_{SRS}^{cs,i}/n_{SRS}^{cs,max}$ by using CS index $n_{SRS}^{cs,i}$ and maximum number $n_{SRS}^{CS,max}$ of CSs. $n_{SRS}^{cs,i}$ may be {0, 1, ... $n_{SRS}^{CS,max}$ - 1}, based on CS index $n_{SRS}^{cs}$, $n_{SRS}^{cs,max}$, antenna port number $p_i$, and number $N_{ap}^{SRS}$ of ports. CS index $n_{SRS}^{cs}$ or $n_{SRS}^{cs,i}$ may be configured by higher layer signaling, or may be included in a transmission comb configuration (higher layer parameter "transmissionComb").

In the present disclosure, the transmission comb configuration, transmissionComb, and the number of transmission combs may be interchangeably interpreted. In the present disclosure, the transmission comb configuration may include at least one of the number of transmission combs ($K_{TC}$), comb offset (start subcarrier offset), and a CS index.

As an SRS in the present disclosure, at least one of a P-SRS, an SP-SRS, and an AP-SRS may be used. In the present disclosure, a P SRS and a P-SRS may be interchangeably interpreted. In the present disclosure, an SP SRS and an SP-SRS may be interchangeably interpreted. In the present disclosure, an AP SRS and an AP-SRS may be interchangeably interpreted. A resource set group and an SRS resource set group may be interchangeably interpreted.

In the present disclosure, xTyR being applied, "txry" being transmitted (reported) in UE capability information (for example, supportedSRS-TxPortSwitch), and xTyR being configured in higher layer signaling / physical layer signaling may be interchangeably interpreted. In the present disclosure, UL transmission with more than four layers may be applied. Processing in the present disclosure may be employed in a UE for which more than four layers are supported.

In the present disclosure, an SRS port, a transmission port, and an SRS transmission port may be interchangeably interpreted. In the present disclosure, a reception port, an antenna port, and a UE antenna port may be interchangeably interpreted.

In the present disclosure, a port and an antenna port may be interchangeably interpreted. "X ports" in the present disclosure may mean X antenna ports (SRS antenna ports).

In the present disclosure, multiplexing using different comb indices, frequency division multiplexing (FDM), and multiplexing using the same time resource and different frequency resources may be interchangeably interpreted. In the present disclosure, multiplexing using different cyclic shift indices, Code Division Multiplexing (CDM), and multiplexing using different cyclic shift indices, the same time resource, and the same frequency resource may be interchangeably interpreted.

In the present disclosure, ports #0 to #7 may be interpreted as ports #1000 to #1007. In other words, 1000 may be added to respective port numbers of ports #0 to #7.

(Radio Communication Method)

In each embodiment, a configurable index, a specific index, a TRP index, a panel index, an index introduced for CJT, an antenna port index, an RS (SRS) port index, a CORESET pool index, and a position of a TCI state may be interchangeably interpreted.

A maximum value of the configurable index may be defined in a specification, or may be configured by RRC. A maximum value of the configurable index (for example, maxID) may be the number of TRPs for CJT. The number of values of the configurable index (for example, $N_{CID}$) may be the number of TRPs for CJT. maxID may equal $N_{CID}$ - 1. For example, the number of TRPs for CJT may be 4. Values of the configurable index (for example, {0, 1, 2, 3}) may be configured for each SRS resource set, may be configured for each SRS resource, or may be indicated by DCI / MAC CE.

In each embodiment, symbol number l in a radio frame for an SRS resource and $l_0+l'$ may be interchangeably interpreted. $l_0+l'$ may be a start symbol number in the radio frame for the SRS resource. $l'$ may be a symbol number (with a start symbol of 0) in the SRS resource.

<Embodiment #1>

This embodiment relates to cyclic shift (CS) determination for each TRP.

A CS to be applied to an SRS may be determined based on at least a configurable index.

<<Option 1>>

A parameter necessary for the CS determination may include at least one of Options 1-1 to 1-4 below.

{Option 1-1} Configurable index
{Option 1-2} CS index (for example, $n_{SRS}^{CS}$)
{Option 1-3} Maximum number of CSs
{Option 1-4} Whether Embodiment #1 or variation of Embodiment #1 (CS hopping) is configured

<<Option 2>>

Configuration/indication/notification of the parameter in Option 1 may follow at least one of Options 2-1 to 2-3 below.

{Option 2-1} Being explicitly configured by RRC parameter (RRC IE)
{Option 2-2} Being implicitly determined based on another RRC parameter Such another RRC parameter may include at least one of a configured comb and the number of TRPs for CJT.
{Option 2-3} Being indicated by at least one of MAC CE and DCI

<<Option 3>>

An actual CS may be given by the following expression. (CS determined in accordance with Option 1 + configurable index) mod number of cyclic shifts

<Variation of Embodiment #1>

CS hopping for SRS may be supported.

The CS hopping for SRS may be performed in a manner similar to that of cyclic shift hopping for PUCCH.

<<Option 1>>

A value to be randomized may be at least one of Options 1-1 to 1-2 below.

{Option 1-1} $n_{SRS}^{CS}$ (CS index configured for UE)
{Option 1-2} Port number with which SRS is transmitted

<<Option 2>>

A factor for the randomization may be at least one of Options 2-1 to 2-3 below.

{Option 2-1} $n_{SRS}^{CS}$ (CS index configured for UE)
{Option 2-2} Symbol number in radio frame for SRS resource
{Option 2-3} Configurable index

<<Example 1-1>>

The CS determination may not consider a configurable index. Cyclic shift $\alpha_i$ may be given by Equation (A1) below.

$$\alpha_i = 2\pi \frac{n_{SRS}^{CS,i}}{n_{SRS}^{CS,max}},$$

where:

$$n_{SRS}^{CS,i} = \begin{cases} \left(n_{SRS}^{CS}{}' + \frac{n_{SRS}^{CS,max}\left\lfloor\frac{|p_i - 1000|}{2}\right\rfloor}{N_{ap}^{SRS}/2}\right) \bmod n_{SRS}^{CS,max} \\ \qquad if\ N_{ap}^{SRS} = 4\ and\ n_{SRS}^{CS,max} = 6, \\ \left(n_{SRS}^{CS}{}' + \frac{n_{SRS}^{CS,max}(p_i - 1000)}{N_{ap}^{SRS}}\right) \bmod n_{SRS}^{CS,max}\ otherwise \end{cases}$$

$$n_{SRS}^{CS}{}' = n_{SRS}^{CS} + \sum_{m=0}^{7} c\left(8\left(n_{s,f}^{\mu}N_{symb}^{slot} + l\right) + m\right) \cdot 2^m$$

$$(A1)$$

<<Example 1-2>>

The CS determination may consider a configurable index. Cyclic shift $\alpha_i$ may be given by Equation (A2) below.

$$\alpha_i = 2\pi \frac{n_{SRS}^{CS,i}}{n_{SRS}^{CS,max}},$$

where:

$$n_{SRS}^{CS,i} = \begin{cases} \left(n_{SRS}^{CS'} + \dfrac{n_{SRS}^{CS,max}\left\lfloor\dfrac{p_i-1000}{2}\right\rfloor}{N_{ap}^{SRS}/2}\right) \bmod n_{SRS}^{CS,max} \\ \qquad if\ N_{ap}^{SRS} = 4\ and\ n_{SRS}^{CS,max} = 6, \\ \left(n_{SRS}^{CS'} + \dfrac{n_{SRS}^{CS,max}(p_i-1000)}{N_{ap}^{SRS}}\right) \bmod n_{SRS}^{CS,max}\ otherwise \end{cases}$$

$$n_{SRS}^{CS'} =$$

$$n_{SRS}^{CS} + \sum_{m=0}^{9} c\left(10(N_{CID}(n_{s,f}^{\mu}N_{symb}^{slot}+l)+configurable\ ID)+m\right)\cdot 2^m$$

$$(A2)$$

<<Example 1-3>>

The CS determination may consider a configurable index and may not consider a slot number and a symbol number. Cyclic shift $\alpha_i$ may be given by Equation (A3) below.

$$\alpha_i = 2\pi \frac{n_{SRS}^{CS,i}}{n_{SRS}^{CS,max}}$$

where:

$$n_{SRS}^{CS,i} = \begin{cases} \left(n_{SRS}^{CS'} + \dfrac{n_{SRS}^{CS,max}\left\lfloor\dfrac{p_i-1000}{2}\right\rfloor}{N_{ap}^{SRS}/2}\right) \bmod n_{SRS}^{CS,max} \\ \qquad if\ N_{ap}^{SRS} = 4\ and\ n_{SRS}^{CS,max} = 6, \\ \left(n_{SRS}^{CS'} + \dfrac{n_{SRS}^{CS,max}(p_i-1000)}{N_{ap}^{SRS}}\right) \bmod n_{SRS}^{CS,max}\ otherwise \end{cases}$$

$$n_{SRS}^{CS'} = n_{SRS}^{CS} + \sum_{m=0}^{M-1} c(M\cdot configurable\ ID+m)\cdot 2^m$$

$$(A3)$$

Here, M may be the number of bits (capable of representing maxID) for covering a maximum value maxID of the configurable index. In other words, $2^{M-1} < maxID + 1 \leq 2^M$ may be employed, or $2^{M-1} < N_{CID} \leq 2^M$ may be employed by using number $N_{CID}$ of values of the configurable index.

According to this embodiment, the UE can appropriately determine a CS for an SRS, and an SRS sequence can be randomized.

<Embodiment #2>

This embodiment relates to sequence hopping for each TRP.

A sequence to be used for an SRS may be determined based on at least a configurable index.

<<Option 1>>

A parameter necessary for determination of a sequence number may include at least one of Options 1-1 to 1-7 below.

{Option 1-1} Configurable index
{Option 1-2} Sequence number (for example, v) The sequence number may be calculated based on a symbol number in a radio frame for an SRS resource.
{Option 1-3} Whether sequence hopping is configured
{Option 1-4} SRS sequence length
{Option 1-5} SRS sequence ID
{Option 1-6} Maximum number of sequences
{Option 1-7} Whether Embodiment #2 (configurable index / sequence hopping for each TRP) is configured

<<Option 2>>

Configuration/indication/notification of the parameter in Option 1 may follow at least one of Options 2-1 to 2-3 below.

{Option 2-1} Being explicitly configured by RRC parameter (RRC IE)
{Option 2-2} Being implicitly determined based on another RRC parameter Such another RRC parameter may include at least one of a configured comb and the number of TRPs for CJT.
{Option 2-3} Being indicated by at least one of MAC CE and DCI

<<Option 3>>

Determination of an actual sequence number may follow at least one of Options 3-1 to 3-3 below.

{Option 3-1} The actual sequence number may be given by the following expression.
(Existing sequence number v + configurable index) mod 2
{Option 3-2} Depending on the configurable index, the actual sequence number may be toggled from existing kei sequence number (existing sequence number) v to existing sequence number + 1 (between existing kei sequence number (existing sequence number) v and existing sequence number + 1). In NR, the number of base sequences may be at most two.
{Option 3-3} An expression for determining the sequence number may be changed to include at least the configurable index. For example, the expression for determining the sequence number may be given by Equation (B1) below.

$$v = \begin{cases} c\left(n_{s,f}^{slot} + l_0 + l' + configurable\ index\right) & if\ M_{sc,b}^{SRS} \geq 6N_{SC}^{RB}, \\ 0 & otherwise \end{cases}$$

$$(B1)$$

<<Option 4>>

Switching between On and Off of Embodiment #2 may be based on at least one of Options 4-1 to 4-3 below.

{Option 4-1} Existing parameter related to sequence hopping. For example, groupOrSequenceHopping (for example, when the parameter is set to "sequenceHopping," sequence hopping in this embodiment is On).
{Option 4-2} Whether Embodiment #2 corresponds to CJT operation
{Option 4-3} New parameter for sequence hopping for CJT (Rel. 18)

According to this embodiment, the UE can appropriately determine a sequence number for an SRS, and an SRS sequence can be randomized.

<Embodiment #3>

This embodiment relates to group hopping for each TRP.

A sequence group to be used for an SRS may be determined based on at least a configurable index.

<<Option 1>>

A parameter necessary for determination of a sequence group number may include at least one of Options 1-1 to 1-6 below.

{Option 1-1} Configurable index
{Option 1-2} Sequence group number (for example, u) The sequence group number may be calculated based on at least one of a symbol number in a radio frame for an SRS resource, and an SRS sequence ID. A range of values of the sequence group number may be 0 to 29.
{Option 1-3} Whether group hopping is configured
{Option 1-4} SRS sequence length
{Option 1-5} Whether Embodiment #3 (configurable index / group hopping for each TRP) is configured
{Option 1-6} SRS sequence ID

<<Option 2>>

Configuration/indication/notification of the parameter in Option 1 may follow at least one of Options 2-1 to 2-3 below.

{Option 2-1} Being explicitly configured by RRC parameter (RRC IE)
{Option 2-2} Being implicitly determined based on another RRC parameter Such another RRC parameter may include at least one of a configured comb and the number of TRPs for CJT.
{Option 2-3} Being indicated by at least one of MAC CE and DCI

<<Option 3>>

Determination of an actual sequence group number may follow at least one of Options 3-1 to 3-2 below.

{Option 3-1} The actual sequence group number may be given by the following expression.
(Existing sequence group number u + configurable index) mod 30
{Option 3-2} An expression for determining the sequence group number may be changed to include at least the configurable index. For example, the expression for determining the sequence group number may be given by any one of Example 1 to Example 5 below.

{{Example 1}}

$$f_{gh}\left(n_{s,f}^{\mu}, l'\right) =$$

$$\left(\sum_{m=0}^{7} c\left(8\left(n_{s,f}^{\mu} N_{symb}^{slot} + l_0 + l'\right) + m\right) \cdot 2^m\right) + configurable\ index) \bmod 30 \tag{C1}$$

{{Example 2}}

$$f_{gh}\left(n_{s,f}^{\mu}, l'\right) =$$

$$\left(\sum_{m=0}^{7} c\left(8\left(n_{s,f}^{\mu} N_{symb}^{slot} + l_0 + l'\right) + m + configurable\ index\right) \cdot 2^m\right) mod\ 30$$

$$(C2)$$

{{Example 3}}

$$f_{gh}\left(n_{s,f}^{\mu}, l'\right) =$$

$$\left(\sum_{m=0}^{7} c\left(8(N_{CID}\left(n_{s,f}^{\mu} N_{symb}^{slot} + l_0 + l'\right) + configurable\ index) + m\right)\right.$$
$$\left. \cdot 2^m\right) mod\ 30$$

$$(C3)$$

{{Example 4}}

$$f_{gh}\left(n_{s,f}^{\mu}, l'\right) =$$

$$\left(\sum_{m=0}^{9} c\left(10(N_{CID}\left(n_{s,f}^{\mu} N_{symb}^{slot} + l_0 + l'\right) + configurable\ index) + m\right)\right.$$
$$\left. \cdot 2^m\right) mod\ 30$$

$$(C4)$$

{{Example 5}} Depending on the number of values of the configurable index, a plurality of expressions may be defined as Expression (C5) below.

if the number of configured IDs(TRPs) $N_{CID}$ is 2, 3:

$$f_{gh}\left(n_{s,f}^{\mu}, l'\right) =$$

$$\left(\sum_{m=0}^{8} c\left(9\left(N_{CID}\left(n_{s,f}^{\mu} N_{symb}^{slot} + l_0 + l'\right) + configurable\ index\right) + m\right)\right.$$
$$\left. \cdot 2^m\right) mod\ 30$$

if the number of configured IDs(TRPs) $N_{CID}$ is 4:

$$f_{gh}\left(n_{s,f}^{\mu}, l'\right) =$$
$$\left(\sum_{m=0}^{9} c\left(10\left(N_{CID}\left(n_{s,f}^{\mu} N_{symb}^{slot} + l_0 + l'\right) + configurable\ index\right) + m\right)\right.$$
$$\left. \cdot 2^m\right)\ mod\ 30$$

$$(C5)$$

An existing sequence group number for an SRS sequence is given by Equation (C6) below.

$$f_{gh}\left(n_{s,f}^{\mu}, l'\right) = \left(\sum_{m=0}^{7} c\left(8\left(n_{s,f}^{\mu} N_{symb}^{slot} + l_0 + l'\right) + m\right) \cdot 2^m\right)\ mod\ 30$$

$$(C6)$$

Assuming subcarrier spacing (SCS) of 15 kHz in this expression for determining the existing sequence group number, respective symbols in the radio frame give independent input to respective bits of a pseudo-random (pseudo-noise (PN)) sequence. An 8-bit pseudo-random sequence covers 140 patterns. The 8-bit pseudo-random sequence is converted to a decimal number.

Decimal number x is input to generator c(x) for an M-bit pseudo-random sequence, thereby outputting a pseudo-random sequence that is M-bit binary number c(i) (i = 0, 1, ..., M - 1). When decimal number x is 0 to A - 1, A pseudo-random sequences can be generated. When x = $2^M$, M independent values are input to c(i), thereby generating a binary number composed of M bits and converting the binary number to a decimal number. M is determined such that a maximum value of x exceeds A.

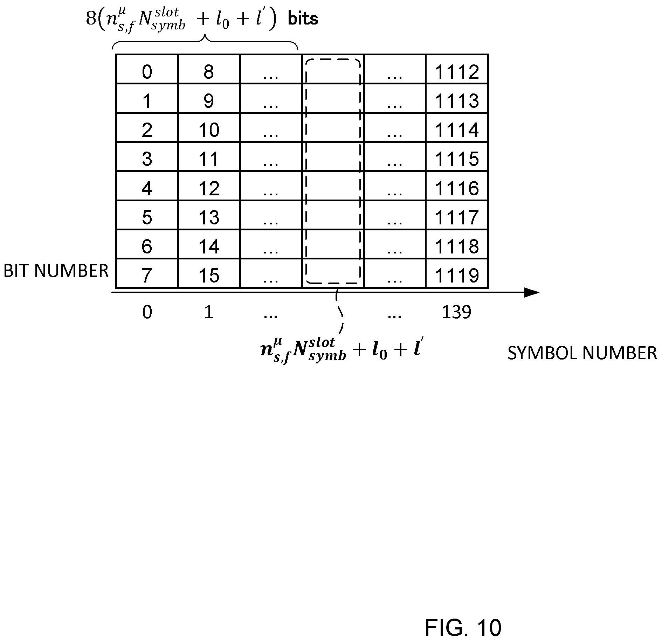

As shown in an example in FIG. 10, in the expression for determining the existing sequence group number for the SRS sequence, M = 8, and as a pseudo-random sequence corresponding to symbol number $n_{s,f}{}^{\mu} N_{symb}{}^{SRS} + l_0 + l'$, an 8-bit binary number at a position shifted by x = 8($n_{s,f}{}^{\mu} N_{symb}{}^{SRS} + l_0 + l'$) bits is converted to a decimal number. In the expression for determining the existing sequence group number for the SRS sequence, $2^8$ = 256 pseudo-random sequences can be generated by generating 8-bit pseudo-random sequences, and thus 140 (number of symbols in 1 radio frame) pseudo-random sequences (8 bits * 140 symbols = 1120 bits) can be obtained.

In Example 1, the group number is calculated based on the addition of a value of the configurable index to a generated decimal number.

In Example 2, an input value of each bit in the 8-bit pseudo-random sequence is shifted by a value of the configurable index.

In Example 3, independent input is given to respective bits of pseudo-random sequence generators in different TRPs to cover 140 symbols for all the TRPs. For different TRPs with different symbols, the same input is given to pseudo-random sequence generation.

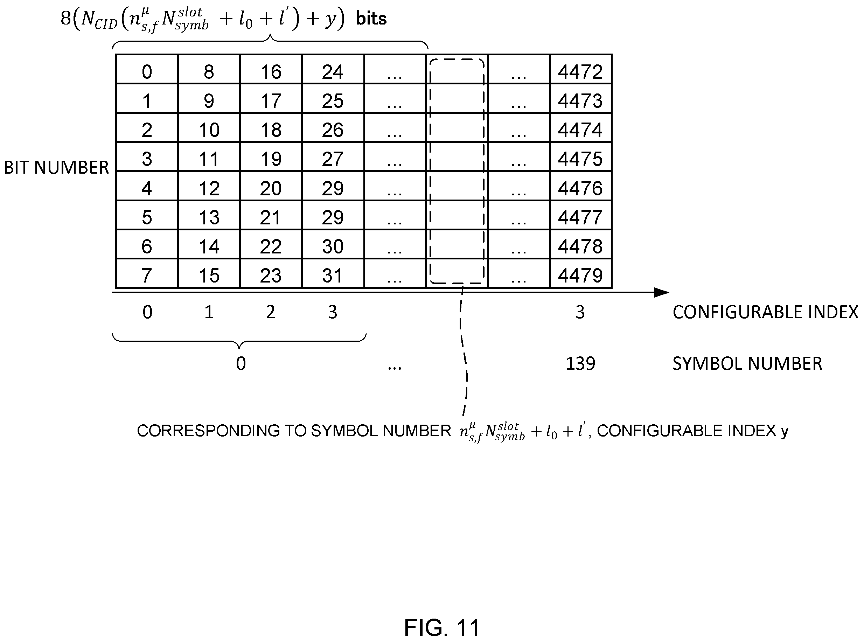

As shown in an example in FIG. 11, in the expression for determining the sequence group number according to Example 3, M = 8, and as a pseudo-random sequence corresponding to symbol number $n_{s,f}{}^{\mu} N_{symb}{}^{SRS} + l_0 + l'$ and configuration index y, an 8-bit binary number at a position shifted by x = 8($N_{CID}$(($n_{s,f}{}^{\mu} N_{symb}{}^{SRS} + l_0 + l'$) + y)) bits is converted to a decimal number.

In Example 4, independent input is given to respective bits of pseudo-random sequence generators in different TRPs to cover 140 symbols for all the TRPs. For different TRPs with different symbols, the same input is given to pseudo-random sequence generation.

In the expression for determining the sequence group number according to Example 4, M = 10, and $2^{10}$ = 1024 pseudo-random sequences can be generated by generating 10-bit pseudo-random sequences, and thus 140 * 4 = 560 (number of symbols in 1 radio frame) pseudo-random sequences (8 bits * 140 symbols * 4 configurable indices = 4480 bits) can be obtained.

In Example 5, a bit width (number of bits) of the pseudo-random sequence is changed depending on the number of TRPs.

<<Option 4>>

Switching between On and Off of Embodiment #3 may be based on at least one of Options 4-1 to 4-3 below.

{Option 4-1} Existing parameter related to sequence group hopping. For example, groupOrSequenceHopping (for example, when the parameter is set to "groupHopping," sequence group hopping in this embodiment is On).
{Option 4-2} Whether Embodiment #3 corresponds to CJT operation
{Option 4-3} New parameter for sequence hopping for CJT (Rel. 18)

According to this embodiment, the UE can appropriately determine a group number for an SRS, and an SRS sequence can be randomized.

<Embodiment #4>

This embodiment relates to a temporal change in a configurable index.
In Embodiments #1 to #3, CS/sequence/group hopping is based on a configurable index. The configurable index may change in a time domain.

<<Option 1>>

The temporal change in the configurable index may be based on at least one of Options 1-1 to 1-2 below.

{Option 1-1} One or more patterns for the temporal change may be defined in a specification.
{{Example 1}} A plurality of patterns may be defined. One of the plurality of patterns may be configured/indicated via an RRC IE / MAC CE / DCI.
{{Example 2}} A plurality of patterns may be configured by RRC. One of the plurality of patterns may be indicated via a MAC CE / DCI.
{Option 1-2} An initial value of the configurable index may be configured. The configurable index may be incremented or decremented for each time unit. The time unit may be any one of the following.

- One or more symbols
- One or more slots
- One or more periodicities (for example, periodicity in periodic/semi-persistent SRS)
- One hop (transmission in same band, period for frequency hopping)

A maximum number of configurable indices may be defined in a specification, or may be configured/indicated via an RRC IE / MAC CE / DCI. For example, the initial value of the configurable index may be set to 0.

<<Option 2>>

The temporal change in the configurable index and at least one of Embodiments #1 to #3 may be combined. Simultaneous hopping of the configurable index and at least one of a CS, a sequence number, and a sequence group number may be performed.
According to this embodiment, the UE can change a configurable index depending on time, and an SRS sequence can be randomized.

<Supplement>

<<UE Capability Information / Higher Layer Parameter>>

At least one of the above-described embodiments may be employed only in the UE that has reported a specific UE capability or supports the specific UE capability.
The specific UE capability may indicate at least one of the following:

- Support of processing/operation/control/information related to at least one of the above embodiments
- Support of CJT
- Support of reception from plurality of coherent TRPs
- Support of mitigation of SRS interference in CJT case
- Support, with sequence randomization (hopping), of mitigation of SRS interference in CJT case

The specific UE capability may be capability applied over all the frequencies (commonly irrespective of frequency), capability per frequency (for example, a cell, a band, a BWP), capability per frequency range (for example, Frequency Range 1 (FR1), FR2, FR3, FR4, FR5, FR2-1, FR2-2), or capability per subcarrier spacing (SCS).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be employed when the UE is configured with specific information related to the above-described embodiment by higher layer signaling. For example, the specific information may be information indicating enabling of a function for at least one of the above-described embodiments, any RRC parameter for specific release (for example, Rel. 18), or the like. The name of the RRC parameter may be denoted by _r18.

When not supporting at least one of the specific UE capabilities or not configured with the specific information, the UE may apply operation of Rel. 15/16, for example.

According to the UE capability / higher layer parameter above, the UE can implement the above functions while maintaining compatibility with an existing specification.

(Supplementary Note A)

With respect to one embodiment of the present disclosure, supplementary notes of the following inventions are added.

{Supplementary Note 1}

A terminal including:

a control section that determines a cyclic shift, based on an index corresponding to one of a plurality of transmission/reception points for coherent joint transmission and that generates a sounding reference signal (SRS) by applying the cyclic shift to a base sequence; and
a transmitting section that transmits the SRS.

{Supplementary Note 2}

The terminal according to supplementary note 1, wherein
the control section determines the cyclic shift, based on a symbol number for the SRS and the index.

{Supplementary Note 3}

The terminal according to supplementary note 1 or 2, wherein
the control section determines an integer, based on a symbol number for the SRS and the index, and determines the cyclic shift, based on a remainder obtained by dividing the integer by a maximum number of the cyclic shifts.

{Supplementary Note 4}

The terminal according to any one of supplementary notes 1 to 3, wherein
the control section multiplies a symbol number for the SRS by the number of the plurality of transmission/reception points, determines an integer, based on a result of the multiplication and the index, and determines the cyclic shift, based on a remainder obtained by dividing the integer by a maximum number of the cyclic shifts.

(Supplementary Note B)

With respect to one embodiment of the present disclosure, supplementary notes of the following inventions are added.

{Supplementary Note 1}

A terminal including:

a control section that determines a base sequence, based on an index corresponding to one of a plurality of transmission/reception points for coherent joint transmission and that generates a sounding reference signal (SRS) by applying a cyclic shift to the base sequence; and
a transmitting section that transmits the SRS.

{Supplementary Note 2}

The terminal according to supplementary note 1, wherein
the control section determines, based on a symbol number for the SRS and the index, a sequence group number for the base sequence.

{Supplementary Note 3}

The terminal according to supplementary note 1 or 2, wherein
the control section determines, based on a symbol number for the SRS, the number of the plurality of transmission/reception points, and the index, a sequence group number for the base sequence.

{Supplementary Note 4}

The terminal according to any one of supplementary notes 1 to 3, wherein
the control section determines, based on a symbol number for the SRS and the index, a sequence number for the base sequence.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

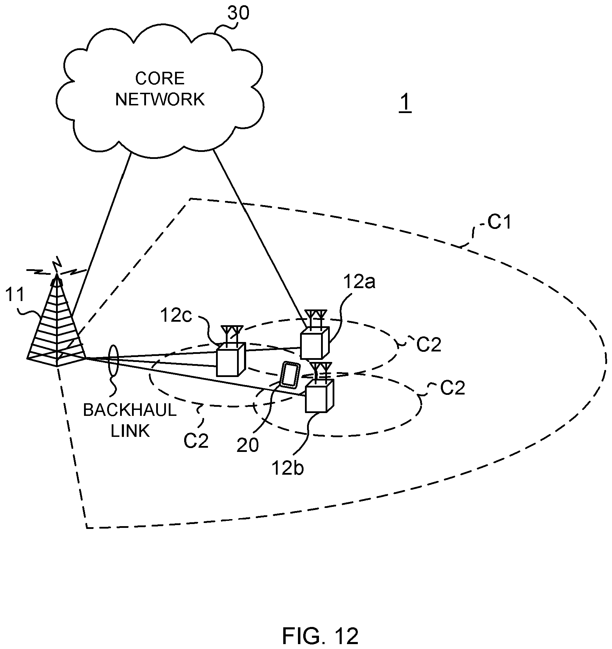

FIG. 12 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a reference signal for measurement (sounding reference signal (SRS)), a demodulation reference signal (DMRS), and so on may be communicated as an uplink reference signal (UL-RS). Note that DMRS may be referred to as a "user terminal specific reference signal (UE-specific Reference Signal)."

(Base Station)

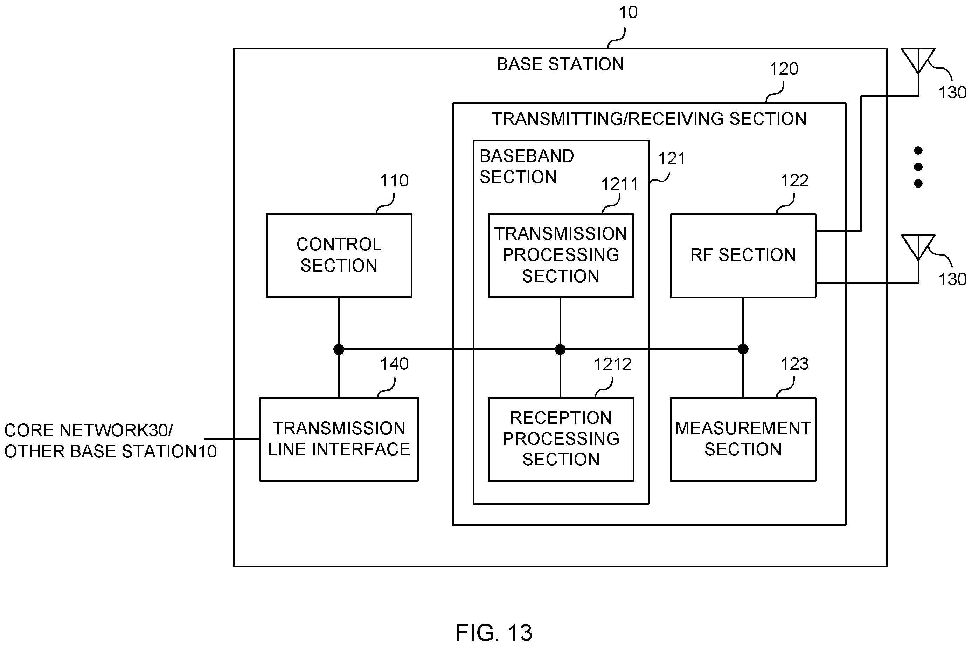

FIG. 13 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that support information indicating that the terminal supports a specific reception function for interference mitigation may be received.

The control section 110 may determine a cyclic shift, based on an index corresponding to one of a plurality of transmission/reception points for coherent joint transmission, and may generate a sounding reference signal (SRS) by applying the cyclic shift to a base sequence. The transmitting/receiving section 120 may receive the SRS.

The control section 110 may determine a base sequence, based on an index corresponding to one of a plurality of transmission/reception points for coherent joint transmission, and may generate a sounding reference signal (SRS) by applying a cyclic shift to the base sequence. The transmitting/receiving section 120 may receive the SRS.

(User Terminal)

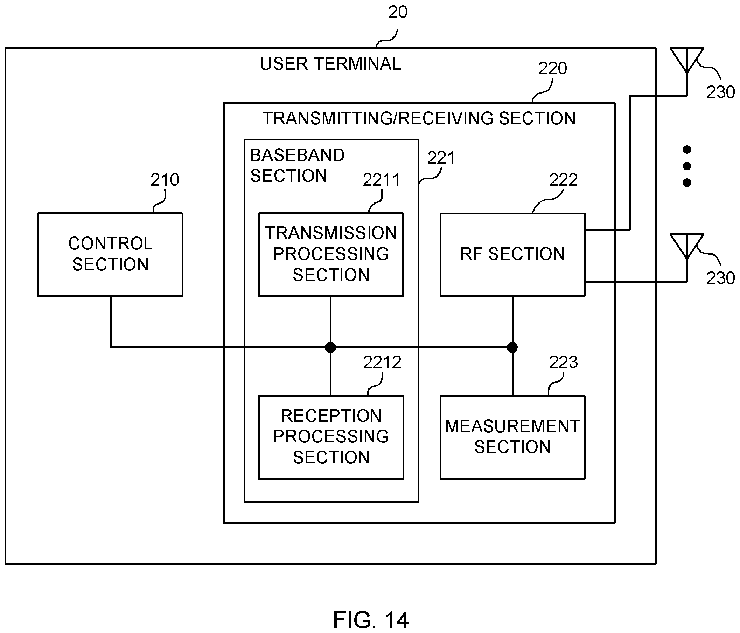

FIG. 14 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may transmit support information indicating support of a specific reception function for interference mitigation in reception.

The control section 210 may determine a cyclic shift, based on an index corresponding to one of a plurality of transmission/reception points for coherent joint transmission, and may generate a sounding reference signal (SRS) by applying the cyclic shift to a base sequence. The transmitting/receiving section 220 may transmit the SRS.

The control section 210 may determine the cyclic shift, based on a symbol number for the SRS and the index.

The control section 210 may determine an integer, based on a symbol number for the SRS and the index, and may determine the cyclic shift, based on a remainder obtained by dividing the integer by a maximum number of the cyclic shifts.

The control section 210 may multiply a symbol number for the SRS by the number of the plurality of transmission/reception points, may determine an integer, based on a result of the multiplication and the index, and may determine the cyclic shift, based on a remainder obtained by dividing the integer by a maximum number of the cyclic shifts.

The control section 210 may determine a base sequence, based on an index corresponding to one of a plurality of transmission/reception points for coherent joint transmission, and may generate a sounding reference signal (SRS) by applying a cyclic shift to the base sequence. The transmitting/receiving section 220 may transmit the SRS.

The control section 210 may determine, based on a symbol number for the SRS and the index, a sequence group number for the base sequence.

The control section 210 may determine, based on a symbol number for the SRS, the number of the plurality of transmission/reception points, and the index, a sequence group number for the base sequence.

The control section 210 may determine, based on a symbol number for the SRS and the index, a sequence number for the base sequence.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (separate apparatus), for example, via wire, wireless, or the like, and using these plurality of pieces of apparatus (these plurality of apparatus). The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

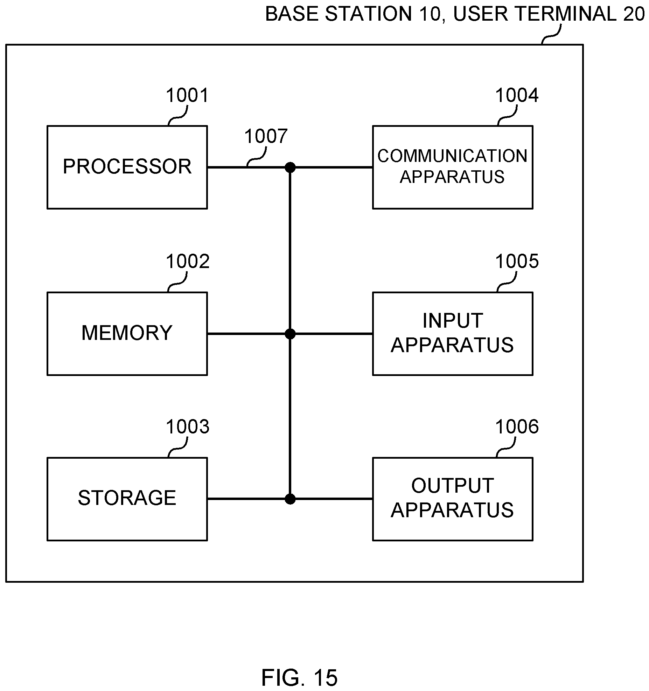

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus (between apparatus).

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware (these hardware).

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media.

For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a case that a base station transmits information to a terminal may be interpreted as a case that the base station indicates, for the terminal, control/operation based on the information, and vice versa.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

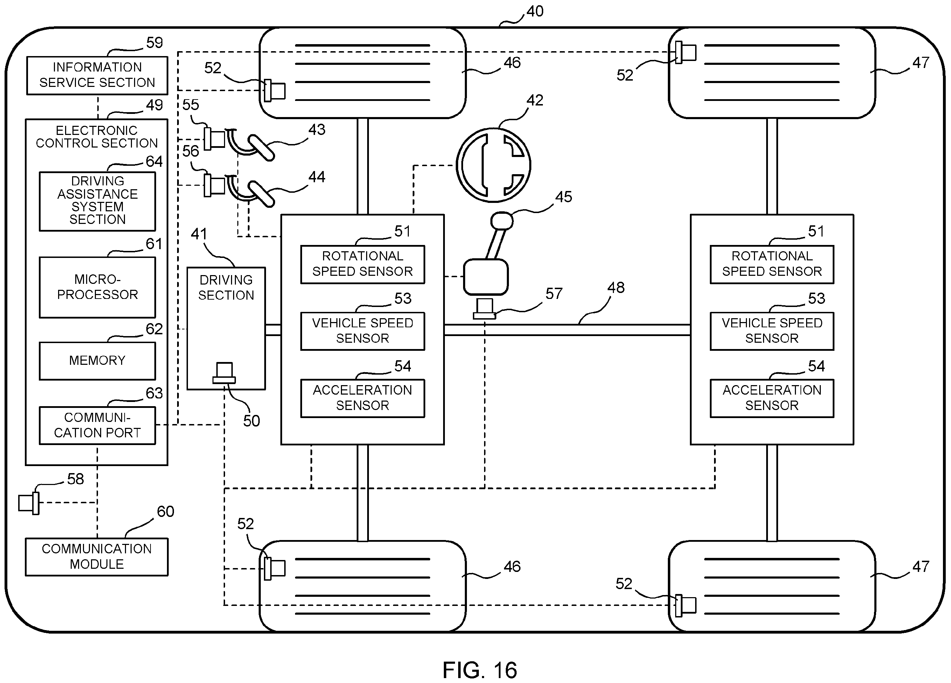

FIG. 16 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information (various information) such as drive information, traffic information, and entertainment information, such as a car navigation system, an audio system, a speaker, a display, a television, and a radio, and one or more ECUs that control these devices. The information service section 59 provides various pieces of information/services (various information/-services), for example, multimedia information/multimedia service, for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "less than or equal to," "less than," "greater than or equal to," "more than," and "equal to" may be interchangeably interpreted. In the present disclosure, the words meaning "good," "poor", "large," "small," "high," "low," "fast," "slow," "broad," "narrow," and the like may be interchangeably interpreted irrespective of the positive degree, the comparative degree, and the superlative degree. In the present disclosure, the words meaning "good," "poor," "large," "small," "high," "low," "fast," "slow," "broad," "narrow," and the like may be interpreted as expressions with "i th" (i is an arbitrary integer), and vice versa, irrespective of the positive degree, the comparative degree, and the superlative degree (for example, "highest" and "i th highest" may be interchangeably interpreted).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:

   a control section that determines a base sequence, based on an index corresponding to one of a plurality of transmission/reception points for coherent joint transmission and that generates a sounding reference signal (SRS) by applying a cyclic shift to the base sequence; and
   a transmitting section that transmits the SRS.

2. The terminal according to claim 1, wherein
   the control section determines, based on a symbol number for the SRS and the index, a sequence group number for the base sequence.

3. The terminal according to claim 1, wherein
   the control section determines, based on a symbol number for the SRS, the number of the plurality of transmission/reception points, and the index, a sequence group number for the base sequence.

4. The terminal according to claim 1, wherein
   the control section determines, based on a symbol number for the SRS and the index, a sequence number for the base sequence.

5. A radio communication method for a terminal, the radio communication method comprising:

   determining a base sequence, based on an index corresponding to one of a plurality of transmission/reception points for coherent joint transmission and generating a sounding reference signal (SRS) by applying a cyclic shift to the base sequence; and
   transmitting the SRS.

6. A base station comprising:

   a control section that determines a base sequence, based on an index corresponding to one of a plurality of transmission/reception points for coherent joint transmission and that generates a sounding reference signal (SRS) by applying a cyclic shift to the base sequence; and
   a receiving section that receives the SRS.

```
SRS-ResourceSet ::=                             SEQUENCE {
    srs-ResourceSetId                           SRS-ResourceSetId,
    srs-ResourceIdList                          SEQUENCE (SIZE(1..maxNrofSRS-ResourcesPerSet)) OF SRS-ResourceId
OPTIONAL, -- Cond Setup
    resourceType                                CHOICE {
        aperiodic                                   SEQUENCE {
            aperiodicSRS-ResourceTrigger                INTEGER (1..maxNrofSRS-TriggerStates-1),
            csi-RS                                      NZP-CSI-RS-ResourceId                        OPTIONAL,
-- Cond NonCodebook
            slotOffset                                  INTEGER (1..32)                             OPTIONAL,
-- Need S
            ...,
            [[
            aperiodicSRS-ResourceTriggerList            SEQUENCE (SIZE(1..maxNrofSRS-TriggerStates-2))
                                                            OF INTEGER (1..maxNrofSRS-TriggerStates-1)   OPTIONAL
-- Need M
            ]]
        },
        semi-persistent                             SEQUENCE {
            associatedCSI-RS                            NZP-CSI-RS-ResourceId                        OPTIONAL,
-- Cond NonCodebook
            ...
        },                                                                                      }
        periodic                                    SEQUENCE {
            associatedCSI-RS                            NZP-CSI-RS-ResourceId                        OPTIONAL,
-- Cond NonCodebook
            ...
        }
    },
    usage                                       ENUMERATED {beamManagement, codebook, nonCodebook, antennaSwitching},
    alpha                                       Alpha                                           OPTIONAL,
-- Need S
    p0                                          INTEGER (-202..24)                              OPTIONAL,
-- Cond Setup
    pathlossReferenceRS                         PathlossReferenceRS-Config                      OPTIONAL,
-- Need M
    srs-PowerControlAdjustmentStates            ENUMERATED { sameAsFci2, separateClosedLoop}    OPTIONAL,
-- Need S
    ...,
    [[
    pathlossReferenceRSList-r16                 SetupRelease { PathlossReferenceRSList-r16}     OPTIONAL
-- Need M
    ]]
}
```

FIG. 1

EP 4 514 012 A1

```
SRS-Resource ::=                      SEQUENCE {
    srs-ResourceId                        SRS-ResourceId,
    nrofSRS-Ports                         ENUMERATED {port1, ports2,
ports4},
    ptrs-PortIndex                        ENUMERATED {n0, n1 }
    transmissionComb                      CHOICE {
        n2                                    SEQUENCE {
            combOffset-n2                         INTEGER (0..1),
            cyclicShift-n2                        INTEGER (0..7)
        },
        n4                                    SEQUENCE {
            combOffset-n4                         INTEGER (0..3),
            cyclicShift-n4                        INTEGER (0..11)
        }
    },
    resourceMapping                       SEQUENCE {
        startPosition                         INTEGER (0..5),
        nrofSymbols                           ENUMERATED {n1, n2, n4},
        repetitionFactor                      ENUMERATED {n1, n2, n4}
    },
    freqDomainPosition                    INTEGER (0..67),
    freqDomainShift                       INTEGER (0..268),
    freqHopping                           SEQUENCE {
        c-SRS                                 INTEGER (0..63),
        b-SRS                                 INTEGER (0..3),
        b-hop                                 INTEGER (0..3)
    },
    groupOrSequenceHopping                ENUMERATED { neither,
groupHopping, sequenceHopping },
    resourceType                          CHOICE {
        aperiodic                             SEQUENCE {
            ...
        },
        semi-persistent                       SEQUENCE {
            periodicityAndOffset-sp                   SRS-
PeriodicityAndOffset,
            ...
        },
        periodic                              SEQUENCE {
            periodicityAndOffset-p                    SRS-
PeriodicityAndOffset,
            ...
        }
    },
    sequenceId                            INTEGER (0..1023),
    spatialRelationInfo                   SRS-SpatialRelationInfo
    ...,
    [[
    resourceMapping-r16                   SEQUENCE {
        startPosition-r16                     INTEGER (0..13),
        nrofSymbols-r16                       ENUMERATED {n1, n2, n4},
        repetitionFactor-r16                  ENUMERATED {n1, n2, n4}
    }
    ]]
```

FIG. 2

**Maximum number of cyclic shifts $n_{SRS}^{CS,max}$ as a function of $K_{TC}$**

| $K_{TC}$ | $n_{SRS}^{cs,max}$ |
|---|---|
| 2 | 8 |
| 4 | 12 |
| 8 | 6 |

FIG. 3

cyclic shifts in case of 2-port

| $N_{ap}^{SRS}$ | $K_{TC}(n_{SRS}^{CS,max})$ | $n_{SRS}^{CS,i}$ |
|---|---|---|
| 2 | 2 (8) | $n_{SRS}^{CS}, (n_{SRS}^{CS} + 4) \bmod 8$ |
| 2 | 4 (12) | $n_{SRS}^{CS}, (n_{SRS}^{CS} + 6) \bmod 12$ |
| 2 | 8 (6) | $n_{SRS}^{CS}, (n_{SRS}^{CS} + 3) \bmod 6$ |

FIG. 4

cyclic shifts in case of 4-port

| $N_{ap}^{SRS}$ | $K_{TC}(n_{SRS}^{CS,max})$ | $n_{SRS}^{CS,i}$ |
|---|---|---|
| 4 | 2 (8) | $n_{SRS}^{CS}, (n_{SRS}^{CS} + 2) \bmod 8, (n_{SRS}^{CS} + 4) \bmod 8, (n_{SRS}^{CS} + 6) \bmod 8$ |
| 4 | 4 (12) | $n_{SRS}^{CS}, (n_{SRS}^{CS} + 3) \bmod 12, (n_{SRS}^{CS} + 6) \bmod 12, (n_{SRS}^{CS} + 9) \bmod 12$ |
| 4 | 8 (6) | $n_{SRS}^{CS}, n_{SRS}^{CS}, (n_{SRS}^{CS} + 3) \bmod 6, (n_{SRS}^{CS} + 3) \bmod 6$ |

FIG. 5

frequency domain starting positions in case of 2-port

| $N_{ap}^{SRS}$ | $K_{TC}(n_{SRS}^{CS,max})$ | $k_{TC}^{p_i}$ |
|---|---|---|
| 2 | - | $\bar{k}_{TC}$ (CS-only) |

FIG. 6

frequency domain starting positions in case of 4-port

| $N_{ap}^{SRS}$ | $K_{TC}(n_{SRS}^{CS,max})$ | $n_{SRS}^{CS}$ | $k_{TC}^{p_i}$ |
|:---:|:---:|:---:|:---:|
| 4 | 2 (8) | {0,1,2,3} | $\bar{k}_{TC}$ (CS-only) |
| 4 | 2 (8) | {4,5,6,7} | $\bar{k}_{TC}, \bar{k}_{TC}+1, \bar{k}_{TC}, \bar{k}_{TC}+1$ |
| 4 | 4 (12) | {0,1,2,3,4,5} | $\bar{k}_{TC}$ (CS-only) |
| 4 | 4 (12) | {6,7,8,9,10,11} | $\bar{k}_{TC}, \bar{k}_{TC}+2, \bar{k}_{TC}, \bar{k}_{TC}+2$ |
| 4 | 8 (6) | - | $\bar{k}_{TC}, \bar{k}_{TC}+4, \bar{k}_{TC}, \bar{k}_{TC}+4$ |

FIG. 7

FIG. 8

EP 4 514 012 A1

FIG. 9

$$8\left(n_{s,f}^{\mu} N_{symb}^{slot} + l_0 + l'\right) \text{ bits}$$

| | | | | | |
|---|---|---|---|---|---|
| 0 | 8 | ... | | ... | 1112 |
| 1 | 9 | ... | | ... | 1113 |
| 2 | 10 | ... | | ... | 1114 |
| 3 | 11 | ... | | ... | 1115 |
| 4 | 12 | ... | | ... | 1116 |
| 5 | 13 | ... | | ... | 1117 |
| 6 | 14 | ... | | ... | 1118 |
| 7 | 15 | ... | | ... | 1119 |

BIT NUMBER

0    1    ...    ...    139

$$n_{s,f}^{\mu} N_{symb}^{slot} + l_0 + l'$$

SYMBOL NUMBER

FIG. 10

$$8\left(N_{CID}\left(n_{s,f}^{\mu} N_{symb}^{slot} + l_0 + l'\right) + y\right) \text{ bits}$$

BIT NUMBER

| 0 | 8 | 16 | 24 | ... | | ... | 4472 |
|---|----|----|----|-----|---|-----|------|
| 1 | 9 | 17 | 25 | ... | | ... | 4473 |
| 2 | 10 | 18 | 26 | ... | | ... | 4474 |
| 3 | 11 | 19 | 27 | ... | | ... | 4475 |
| 4 | 12 | 20 | 29 | ... | | ... | 4476 |
| 5 | 13 | 21 | 29 | ... | | ... | 4477 |
| 6 | 14 | 22 | 30 | ... | | ... | 4478 |
| 7 | 15 | 23 | 31 | ... | | ... | 4479 |

0   1   2   3                    3        CONFIGURABLE INDEX

0                        ...          139      SYMBOL NUMBER

CORRESPONDING TO SYMBOL NUMBER $n_{s,f}^{\mu} N_{symb}^{slot} + l_0 + l'$, CONFIGURABLE INDEX y

FIG. 11

FIG. 12

FIG. 13

FIG. 14

BASE STATION 10, USER TERMINAL 20

1001

PROCESSOR

1007

1004

COMMUNICATION
APPARATUS

1002

MEMORY

1005

INPUT
APPARATUS

1003

STORAGE

1006

OUTPUT
APPARATUS

FIG. 15

FIG. 16

## INTERNATIONAL SEARCH REPORT

| | International application No. |
|---|---|
| | **PCT/JP2022/018206** |

### A. CLASSIFICATION OF SUBJECT MATTER

*H04W 72/044*(2023.01)i; *H04W 16/28*(2009.01)i; *H04W 72/0457*(2023.01)i
FI:    H04W72/04 134; H04W72/04 111; H04W16/28 150

According to International Patent Classification (IPC) or to both national classification and IPC

### B. FIELDS SEARCHED

Minimum documentation searched (classification system followed by classification symbols)

H04W72/04; H04W16/28

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | ZTE. Initial views on Rel-18 MIMO evolution [online]. 3GPP TSG RAN WG1 #108-e. 03 March 2022, R1-2201192, [retrieval date 01 November 2022], Internet<URL:https://www.3gpp.org/ftp/tsg_ran/WG1_RL1/TSGR1_108-e/Docs/R1-2201192.zip> section 2.4 | 1-6 |
| A | ERICSSON. Introduction of MIMO enhancements [online]. 3GPP TSG RAN WG1 #107-e. 19 November 2021, R1-2112919, [retrieval date 01 November 2022], Internet<URL:https://www.3gpp.org/ftp/tsg_ran/WG1_RL1/TSGR1_107-e/Docs/R1-2112919.zip> section 6.4.1.4.2 | 1-6 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 November 2022** | **15 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 36.300 V8.12.0*, April 2010